# EUROPEAN PATENT APPLICATION

(11) **EP 3 892 405 A1**
(43) Date of publication of application: **13.10.2021**
(21) Application number: 20168755.5
(22) Date of filing: 08.04.2020
(51) Int. Cl.: B23B 27/06, B23B 25/02, B23G 1/02

(54) **A METHOD FOR CUTTING METALLIC THREADS**

(71) Applicant: AB Sandvik Coromant, 811 81 Sandviken (SE)
(72) Inventor: ÅHS, Roger, 811 81 SANDVIKEN (SE); LOIKKANEN, Henrik, 811 81 SANDVIKEN (SE); NILSSON, Åke, 811 81 SANDVIKEN (SE)
(74) Representative: Sandvik

(57) **Abstract**

A strategy for a CNC-lathe for machining a predefined thread (3) in a work piece (2), comprising moving a threading tool (1) along a longitudinal (Z) direction through a set of passes (P1 - P6), wherein the longitudinal (Z) direction is parallel to or coinciding the rotational axis; during a first pass (P1) oscillating the threading tool (1) in a radial (X) direction at a first frequency such that the threading tool (1) moves between extremes at a first radial distance (D1) and a second radial distance (D2) from a last pass (P6),
during a second pass (P2) oscillating the threading tool (1) in a radial (X) direction at a second frequency, such that the threading tool (1) moves between extremes at a third radial distance (D3) and a fourth radial distance (D4) from the last pass (P6), and during a last pass (P6) moving the tool without oscillation in the radial (X) direction, during a third pass (P3) oscillating the threading tool (1) in a radial (X) direction at a third frequency, such that the threading tool (1) moves between extremes at a fifth radial distance (D5) and a sixth radial distance (D6) from the last pass (P6), and during a second last pass (P3, P5) oscillating the threading tool (1) to a radial distance (D6, D10) from the last pass (P6) which is less than half the difference between the first radial distance (D1) and the second radial distance (D2).

## Description

### TECHNICAL FIELD OF THE INVENTION

The present invention belongs to the technical field of metal cutting. More specifically the present invention belongs to the field of the turning operation known as threading.

### BACKGROUND OF THE INVENTION AND PRIOR ART

The present invention refers to a method according to the preamble of claim 1. In other words, the present invention relates to a machining method for a CNC-lathe for forming a predefined thread in a work piece, comprising the steps of providing a metal work piece, providing a threading tool, rotating the metal work piece around a rotational axis thereof, moving the threading tool a longitudinal direction through a set of passes; wherein the longitudinal direction is parallel to or coinciding the rotational axis; during a first pass, oscillating the threading tool in a radial direction at a first frequency such that the threading tool moves between a first radial distance and a second radial distance from a last pass of the set of passes; wherein the first radial distance is greater than the second radial distance; during a second pass, oscillating the threading tool in a radial direction at a second frequency, such that the threading tool moves between a third radial distance and a fourth radial distance from the last pass; wherein the third radial distance is greater than the fourth radial distance; wherein the first radial distance is greater than the third radial distance, wherein the second radial distance is greater than the fourth radial distance, and during a last pass, moving the tool without oscillation in the radial direction.

In threading, a thread is formed. Threading may be made in a turning operation. A metal work piece rotates. A threading tool is moved longitudinally relative to the rotating work piece. A thread is gradually formed through a set or number of passes.

EP3241637A1 disclose a method of threading a work piece, where a threading tool oscillates in a radial direction or an X direction. The method is said to reduce the problem of long chip strips.

The inventors have found that there is a need for a further improved method for threading.

### SUMMARY OF THE INVENTION

It is an object of the invention to improve chip breaking or chip control, and/or improve the tool life. It is a further object to machine the thread in a time-efficient manner.

At least one of said objectives is achieved by the initially defined method, comprising the further steps of during a third pass, oscillating the threading tool in a radial direction at a third frequency, such that the threading tool moves between a fifth radial distance and a sixth radial distance from the last pass; wherein the fifth radial distance is greater than the sixth radial distance; wherein the fifth radial distance is less than the third radial distance, wherein the sixth radial distance is less than the fourth radial distance, wherein during the second last pass oscillating the threading tool between an outer radial distance and an inner radial distance from the last pass, wherein said inner radial diastance is zero or less than half the difference between the first radial distance and the second radial distance.

A machining method is a metal cutting method. A CNC-lathe is any computer or computerized numerical control machine tool suitable for turning. A thread or a screw thread is a helical structure. The thread extends between a thread start and a thread end. The thread has a constant or substantially constant pitch, i.e. the distance along the rotational axis which the thread travels per one revolution, i.e. threads per length unit. The thread can be straight, i.e. cylindrical, or tapered, i.e. conical. The thread may be external or internal. The thread may be right-hand or left-hand. A cross sectional shape of the thread is called a thread form. The thread form, or thread profile, may have various shapes such as e.g. ISO, trapezoidal, UNC. The thread form preferably comprise a first thread flank, a second thread flank, a crest and a root.
The thread is preferably a single-start thread. The metal work piece is made from e.g. steel. The metal work piece is preferably at least partially cylindrical or substantially cylindrical. The threading tool preferably comprise a tool body and a threading insert. The threading insert is preferably made at least partially from a wear resistant material, such as e.g. cemented carbide. The threading tool, preferably the threading insert, comprises a cutting edge. The shape of the cutting edge preferably corresponds to or substantially corresponds to the thread form.
The threading tool, preferably the threading insert preferably comprises one or more tooth.
The metal work piece rotates in one direction around a rotational axis thereof, wherein the rotational axis preferably coincides with a longitudinal axis of symmetry of the metal work piece.
The method comprises the step of moving the threading tool in a longitudinal direction in a set or series of passes. The thread is formed through a set of passes. The number of passes is preferably 4 - 20. For each pass, material is removed from the metal work piece. The last pass generate the final shape of the thread, i.e. the predefined thread.

The method can be used for radial infeed, flank infeed, or with alternating flank infeed.
The longitudinal direction is parallel to the rotational axis of the metal work piece. For each pass, the threading tool moves longitudinally in one direction, and removes metal from the metal work piece through metal cutting. At the end of each pass, the threading tool goes out of cut by retracting the threading tool, i.e. moving the threading tool in a direction away from the metal work piece. Prior to the subsequent pass, the threading tool moves longitudinally a direction opposite to said one direction, without cutting.
In each pass, the threading tool moves from the thread start to the thread end, or from a position in the vicinity of the thread start to a position in the vicinity of the thread end. In other words, the threading tool goes into cut in the vicinity of the thread start and goes out of cut in the vicinity of the thread end. Vicinity in this context is to be understood as within one revolution from the thread start.
If the thread is an external thread, said passes are gradually closer to the rotational axis. In other words, during the first pass the threading tool is on average at a greater radial distance from the rotational axis, compared to during the second pass. During the last pass, the threading tool is on average at a smaller radial distance from the rotational axis, compared to during the second last pass. The moving the threading tool in a longitudinal direction, i.e. along the Z-axis, is called longitudinal feed. The longitudinal feed is preferably on average constant, i.e. having the same average value, during all passes. Said average value is preferably equal to the pitch of the thread. The longitudinal feed during the last pass is constant, i.e. has a constant value.
During the first pass, the threading tool oscillates in a radial direction at a first frequency. The oscillation is preferably a periodical oscillation, having a periodical waveform such as e.g. triangle wave or sine wave. Said waveform comprises peaks and valleys. The oscillation of the threading tool oscillates between peaks and valleys. If the thread is an external thread, said peaks are radially outer, and said valleys are radially inner.

The first frequency is preferably constant. Frequency means the one oscillation per time unit or unit of time. For example, if one oscillation takes 2 s, i.e. two seconds, the frequency is 0.5 s⁻¹. Preferably, during the first pass the threading tool oscillates between one time, i.e. one period, per one revolution of the metal work piece, and one time per four revolutions of the metal work piece.
Even more preferably, during the first pass the threading tool oscillates one time, i.e. one period, per two revolutions of the metal work piece. One period is understood as starting at the first radial distance, moving to the second radial distance, and back to the first radial distance.
The time for one revolution of the metal work piece around the rotational axis thereof is preferably equal to or a multiple of the time for one oscillation, or equal to the time for one oscillation divided by an integer.
The oscillation of the threading tool is radially, such that the threading tool during the first pass moves between a first radial distance from the last pass and a second radial distance from a last pass. Said first radial distance corresponds to the peaks and said second radial distance corresponds to the valleys. Said distances are from the last pass. The amplitude of the oscillation during the first pass is equal to the difference between the first radial distance and the second radial distance. Regardless of if the thread is straight or tapered, said radial distances are in a direction perpendicular to the rotational axis of the metal work piece. The oscillation during each oscillating pass is such that the threading tool repeatedly engages and disengages the metal work piece and creates chips.
Oscillating during the first pass means that the depth of cut, or infeed, varies during the first pass. The active part of the cutting edge of the threading tool varies during the first pass.
Preferably, if the thread is an external thread, the first radial distance is greater than the radius of the metal work piece. In other words, preferably the trajectory of the first pass intersects a peripheral or outer surface of the metal work piece. Thus, the first pass is preferably an interrupted cut, i.e. the cutting edge is active, i.e. cuts metal, in an interrupted manner. The effect is that chips can be shorter during the first pass.
The movement of the threading tool during the first pass thus comprises two components. One longitudinal component where the threading tool moves along or parallel to the longitudinal Z-axis, in one direction, and one radial component where the threading tool oscillates radially, perpendicular to the rotational axis.
After the first pass, the threading tool moves without cutting longitudinally in a direction which is longitudinally opposite to the first pass.
During the second pass, the threading tool oscillates in a radial direction at a second frequency, which second frequency preferably is different than said first frequency, even more preferably higher than said first frequency, even more preferably two times the first frequency.
Preferably, during the second pass the threading tool oscillates one time, i.e. one period, per one revolution of the metal work piece.
The oscillation of the threading tool is such that the threading tool moves between a third radial distance and a fourth radial distance from the last pass. During the second pass, the threading tool moves longitudinally, in a direction along the Z-axis which is in the same direction as for the first pass.
The third radial distance is greater than the fourth radial distance. The third radial distance is preferably smaller than the outer surface or peripheral surface of the metal work piece, if the thread is an external thread.
The first radial distance is greater than the third radial distance, and the second radial distance is greater than the fourth radial distance. In other words, the second pass is on average at a smaller diameter than the first pass, if the thread is an external thread.
A difference, i.e. a radial distance, between the first radial distance and the second radial distance is preferably different than a difference between the third radial distance and the fourth radial distance.
The trajectory of the second pass intersects the trajectory of the first pass. Preferably, for each time period of the second pass i.e. for each oscillation of the second pass, the trajectory of the second pass intersects the trajectory of the first pass two times. Preferably, the time or distance which the trajectory of the second pass is radially below the trajectory of the first pass is greater than the time or distance which the trajectory of the second pass is radially above the trajectory of the first pass, if the thread is an external thread. For an external thread, radially above means radially outer or at a greater radial distance, and radially below means radially inner or at a smaller radial distance.
During the last pass, the threading tool moves linearly, i.e. without oscillation in the radial direction. The linear movement is parallel to the rotational axis, if the thread is a cylindrical thread. The longitudinal feed during the last pass is equal to the pitch of the thread. The last pass forms the final shape of the thread.
During the third pass, the threading tool oscillates in a radial direction at a third frequency, which third frequency preferably different than the second frequency. Preferably, the third frequency is equal to or substantially equal to the first frequency. Preferably, the third frequency is lower than the second frequency. The oscillation of the threading tool is such that the threading tool moves between a fifth radial distance and a sixth radial distance from the last pass.The third pass may or may not be the second last pass.
During the third pass, the threading tool moves longitudinally, in a direction along the Z-axis which is in the same direction as for the first and second passes.
The fifth radial distance is greater than the sixth radial distance.
The fifth radial distance is less than the third radial distance.
The sixth radial distance is less than the fourth radial distance.
The trajectory of the third pass intersects the trajectory of the second pass. Preferably, for each time period of the third pass, the trajectory of the third pass intersects the trajectory of the second pass two times. Preferably, the time or distance which the trajectory of the third pass is below the trajectory of the second pass is greater than the time or distance which the trajectory of the third pass is above the trajectory of the second pass.
During the second last pass, the threading tool oscillates radially between an outer radial distance and an inner radial distance from the last pass, where said inner radial distance is zero or less than half the difference between the first radial distance and the second radial distance.
In other words, during the second last pass the threading tool oscillates radially between two radial distances from the last pass, where the radial distance of the above radial distances which are radially closest to the last pass is zero, i.e. intersects the last pass, or less than half the difference between the first radial distance and the second radial distance. Preferably, said radial distance is less than 0.10 mm, even more preferably, less than 0.06 mm.
In other words, preferably during the second last pass the threading tool oscillates in the radial direction such that a trajectory of the second last pass intersects or substantially intersects the trajectory of the last pass. Substantially in this context should be understood as within 0.10 mm, even more preferably within 0.06 mm.
By this, the chip control can be further improved, both for the second last pass and the last pass.
The second last pass may be the third pass. Alternatively, the second last pass may be a fourth pass, a fifth pass or a pass of a higher number. The second last pass is the pass immediately prior to the last pass.
Preferably, the second radial distance is greater than the fifth radial distance.
Preferably, the frequency of the oscillation during the second last pass is less than or equal to eight times the frequency of the oscillation during the first pass. Even more preferably, the frequency of the oscillation during the second last pass is less than five times the frequency of the oscillation during the first pass. This is an advantage especially if the number of oscillating passes are high, for example three or more or five or more oscillating passes. Especially, if compared to a frequency which increases exponentially. In such a way, the method may be used in more types of CNC-machines, since not all CNC-machines allows a high frequency radial oscillation. The inventors have realized that the risk of damage of moving parts of the CNC-lathe is reduced if the frequency is kept relatively low.
The amplitudes for all oscillating passes are preferably less than 1.0 mm. In other words the difference between the first radial distance and the second radial distance is preferably less than 1.0 mm. Preferably, all oscillating passes are all passes except the last pass.
The inventors have realized that the risk of damage of moving parts of the CNC-lathe is reduced if the amplitude is relatively low.

According to an embodiment, the third radial distance is greater than the second radial distance and smaller than the first radial distance.

By such a method, chip breaking or chip control and/or tool life if further improved.

Preferably, the trajectory of the second pass intersects the trajectory of the first pass.
Preferably, the third radial distance is partly above the trajectory of the first pass. Above in this context should be understood in a context where the last pass is shown horizontally at a bottom of an x-y diagram, where the horizontal axis represent time or number of revolutions or the Z-axis, and the vertical axis represent a radial distance or the X-axis.

According to an embodiment, a difference between the first radial distance and the second radial distance is different than a difference between the third radial distance and the fourth radial distance.

By such a method, chip breaking or chip control and/or tool life if further improved.

In other words, the amplitude of the oscillation during the first pass is different than the amplitude of the oscillation during the second pass. Preferably, a difference between the first radial distance and the second radial distance is smaller than a difference between the third radial distance and the fourth radial distance. In other words, preferably the amplitude of the oscillation during the first pass is smaller than the amplitude of the oscillation during the second pass.
Preferably, a difference between the fifth radial distance and the fourth radial distance is smaller than a difference between the third radial distance and the fifth radial distance.

According to an embodiment, a difference between the first radial distance and the third radial distance is smaller than a difference between the third radial distance and the second radial distance.

By such a method, chip breaking or chip control and/or tool life if further improved.

According to an embodiment, the second frequency is different than the first frequency.

By such a method, chip breaking or chip control and/or tool life if further improved.

Preferably, the second frequency is greater than the first frequency. Preferably, the second frequency is two times greater or substantially two times greater than the first frequency. Preferably, the phase of the second frequency is such that that the fourth radial distance or distances coincides to the first and second radial distances. Coincides in this context can be understood as coincides along the Z-axis, i.e. coincides longitudinally.

According to an embodiment, the third frequency is different than the second frequency.

By such a method, chip breaking or chip control and/or tool life if further improved.

Preferably, the third frequency is less than, i.e. smaller than the second frequency.
Preferably, the third frequency is half or substantially half the second frequency.

According to an embodiment, the third frequency is the same or substantially the same as the first frequency.

By such a method, chip breaking or chip control and/or tool life if further improved. By such a method, the frequency can be kept at a moderate level, which is more suitable for CNC-lathes where high frequency radial oscillation is not suitable.

Preferably, the third frequency is equal to or substantially equal to the first frequency. Preferably, the third frequency is in phase or substantially in phase with the first frequency. In other words, the oscillation during the third pass is with no or little phase-shift in relation to the first pass.

According to an embodiment, the second radial distance and the sixth radial distance coincide or substantially coincide in the longitudinal direction.

By such a method, chip breaking or chip control and/or tool life if further improved.

In other words, the valleys of the oscillation during the first pass coincides longitudinally with the valleys of the first pass.

Preferably, the first pass and the third pass has the same or substantially the same frequency. Preferably, there is a no phase shift, i.e. zero or substantially zero phase shift, between the first pass and the third pass. The longitudinal direction is the Z-direction.

According to an embodiment, the fifth radial distance is greater than the fourth radial distance.

By such a method, chip breaking or chip control and/or tool life if further improved.

Preferably, the trajectory of the third pass intersects the trajectory of the second pass.

According to an embodiment, the difference between the fifth radial distance and the sixth radial distance is smaller than the difference between the first radial distance and the second radial distance.

By such a method, chip breaking or chip control and/or tool life if further improved.

In other words, the amplitude of the oscillation during the third pass is smaller than the amplitude of the oscillation during the first pass.

According to an embodiment, during a fourth pass (P4), the threading tool is oscillating in a radial direction at a fourth frequency, such that the threading tool moves between a seventh radial distance and a eighth radial distance from the last pass; wherein the seventh radial distance is greater than the eighth radial distance; wherein the seventh radial distance is less than the fifth radial distance, wherein the eighth radial distance is less than the sixth radial distance.

By such a method, chip breaking or chip control and/or tool life if further improved. By such a method, a thread having a larger cross section can be machined in a more risk-free and/or economical manner.

Preferably, the difference between the seventh radial distance and the eighth radial distance is smaller than the radial distance between the third radial distance and the fourth radial distance. In other words, preferably the amplitude of the fourth pass is smaller than the amplitude of the second pass. Preferably, the difference between the seventh radial distance and the eighth radial distance is smaller than the difference between the first radial distance and the second radial distance. In other words, preferably the amplitude of the fourth pass is smaller than the amplitude of the first pass. Preferably, the difference between the seventh radial distance and the eighth radial distance is greater than the difference between the fifth radial distance and the sixth radial distance. In other words, preferably the amplitude of the fourth pass is greater than the amplitude of the third pass. Preferably, the fourth frequency is the same or substantially the same as the second frequency. Preferably, there is no phase shift between the oscillation during the second pass and the oscillation during the fourth pass.
Preferably, the seventh radial distance is greater than the sixth radial distance. Preferably, the trajectory of the fourth pass intersects the trajectory of the third pass.

According to an embodiment, during a fifth pass the threading tool is oscillating in a radial direction at a fifth frequency, such that the threading tool moves between a ninth radial distance and a tenth radial distance from the last pass; wherein the ninth radial distance is greater than the tenth radial distance; wherein the tenth radial distance is less than the eighth radial distance.

By such a method, chip breaking or chip control and/or tool life if further improved. By such a method, a thread having a larger cross section can be machined in a more risk-free and/or economical manner.

Preferably, the difference between the ninth radial distance and the tenth radial distance is smaller than the difference between the third radial distance and the fourth radial distance. Preferably, the difference between the ninth distance and the tenth distance is smaller than the difference between the first radial distance and the second radial distance. Preferably, the difference between the ninth radial distance and the tenth radial distance is greater than the difference between the fifth radial distance and the sixth radial distance. Preferably, the difference between the ninth radial distance and the tenth radial distance is greater than the difference between the seventh radial distance and the eighth radial distance.
The fifth frequency is preferably different from the fourth frequency. If the fifth pass is the second last pass, the fifth frequency is preferably higher than the first frequency. If the fifth pass is the second last pass, the fifth frequency is preferably higher than the second frequency.
If the fifth pass is not the second last pass, the fifth frequency is preferably equal to or substantially equal to the first frequency.

According to an embodiment, for all passes the threading tool is moved in the longitudinal direction at a longitudinal feed rate which is 0.5 - 3.0 mm/revolution.

By such a method, a thread having a pitch of 0.5 - 3.0 mm can be machined in a more efficient manner.

Preferably, for all passes the longitudinal feed rate is the same. In other words, preferably the longitudinal feed rate has a constant value which is the same for all passes. Said value is equal to the pitch of the thread. The longitudinal direction is along or parallel to the Z-axis.

According to an embodiment, the threading tool comprises a threading insert and an insert seat, wherein the threading insert comprises a top surface and a bottom surface, wherein the top surface and the bottom surface are connected by a side surface, wherein the bottom surface comprises engagement means for contact with a corresponding structure formed in the insert seat.

By such a method, the surface quality of the machined surface is surprisingly found to be improved. By such a method, the risk of insert movement is reduced.

The threading insert is preferably made at least partially from a wear resistant material, such as e.g. cemented carbide. The threading insert comprises a cutting edge. The shape of the cutting edge preferably corresponds to or substantially corresponds to the thread form. The top surface comprises a rake face. The cutting edge are form in the border between the top surface and the side surface. The side surface comprise a clearance surface. The top surface preferably comprises chip breaking or chip formation means, preferably in the form of one or more protrusions and/or depressions. The cutting edge preferably comprises a first cutting edge and a second cutting edge connected by a connecting cutting edge. The connecting cutting edge is preferably arranged to cut a thread root. The connecting edge may be convex in a top view. The connecting edge may have a shape in a top view which is a circular arc. The first cutting edge is preferably arranged to cut a first thread flank. The second cutting edge is preferably arranged to cut a second thread flank.
The bottom surface of the threading insert comprises engagement means for contact or co-operation with corresponding engagement means, i.e. a corresponding structure, formed in the insert seat, also known as insert pocket. Said engagement means prevents movement, especially rotation, of the threading insert when mounted in the insert seat.
The threading insert is preferably mountable in the insert seat by means of a clamping member, e.g. a screw or a bolt or a top clamp. The threading insert may preferably comprise a through hole for a screw or a bolt, where said through hole extends between the top and bottom surfaces of the threading insert.
The engagement means formed in the bottom surface of the threading insert may be in the form of one or more cavities, e.g. one or more grooves. Alternatively, said engagement means may be in the form of one or more protrusions. Alternatively, said engagement means may be in the form of one or more inclined surface.
If the engagement means formed in the bottom surface of the threading insert are in the form of cavities such as grooves, the corresponding engagement means formed in the insert seat are preferably in the form of protrusions, such as ridges.
The threading tool, in particular the bottom of the threading insert and the insert seat, may preferably be arranged in accordance with what is shown and described in EP1935539A1, which hereby is incorporated by reference.

According to an aspect of the invention, there is provided a computer program having instructions which when executed by a CNC-lathe causes the CNC-lathe to perform the steps according to any of the preceding methods.

Said computer program, or computer program product, may be included in a CAM-software product, i.e. a software for computer-aided manufacturing. Said computer program may be in the form a computer readable medium such as a USB-stick, a CD-ROM or a data stream.

### DESCRIPTION OF THE DRAWINGS

The present invention will now be explained in more detail by a description of embodiments of the invention and by reference to the accompanying drawings.
- Fig. 1: is a perspective view of a metal work piece and clamp-ing jaws, showing the X- and Z-axes.
- Fig. 2: is a side view of threading method showing four passes.
- Fig. 3: is a perspective view of the threading tool in Fig. 2.
- Fig. 4: is a schematic diagram of a first embodiment of the in-vention, illustrating passes traced by the threading tool as seen in a Z-axis direction.
- Fig. 5: is a schematic diagram illustrating the position of the threading tool with respect to the workpiece in a first embodiment of the present invention.
- Fig. 6: is a schematic diagram illustrating the position of the threading tool with respect to the workpiece in a second embodiment of the present invention.

### DETAILED DESCRIPTION OF EMBODIMENTS OF THE INVENTION

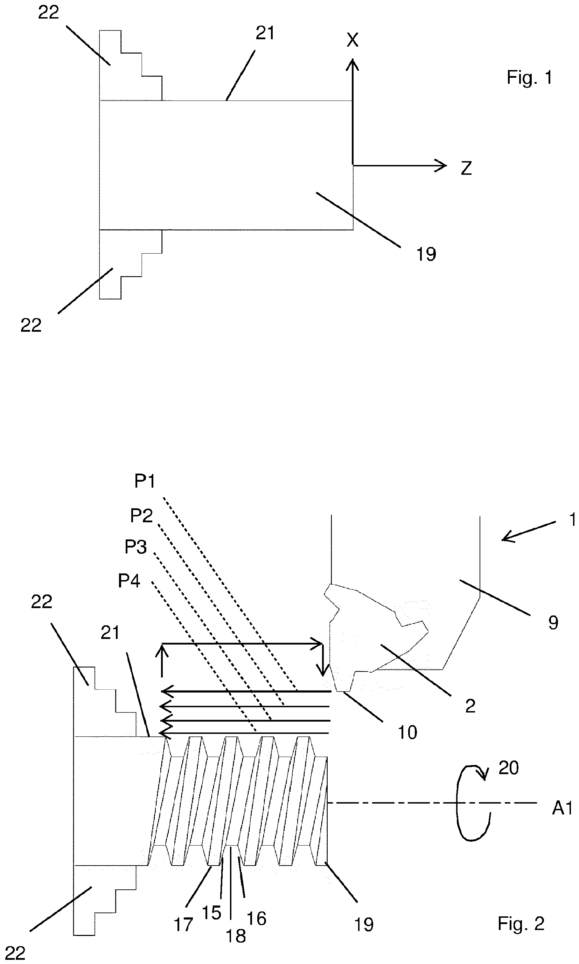

Reference is made to Fig. 1 which show a metal work piece 19 which is connected to a spindle (not shown) of a CNC-lathe (not shown) by clamping means 22 in the form of clamping jaws. The clamping means 22 are connected to the spindle, and are in contact with a peripheral surface 21 of the metal work piece 19. Rotation of the spindle causes a rotation of the metal work piece 19. The clamping means 22 may be of other configurations. The metal work piece 19 is in this case cylindrical. However, the metal work piece 19 may have other shapes. The X- and Z-axis are shown. Depending on the type of CNC-lathe, the metal work piece 19 may be moveable in the Z axis, such as for CNC-lathes configured with a bar feeder apparatus. For other CNC-lathes, the metal work piece 19 may not be moveable in the Z-direction.

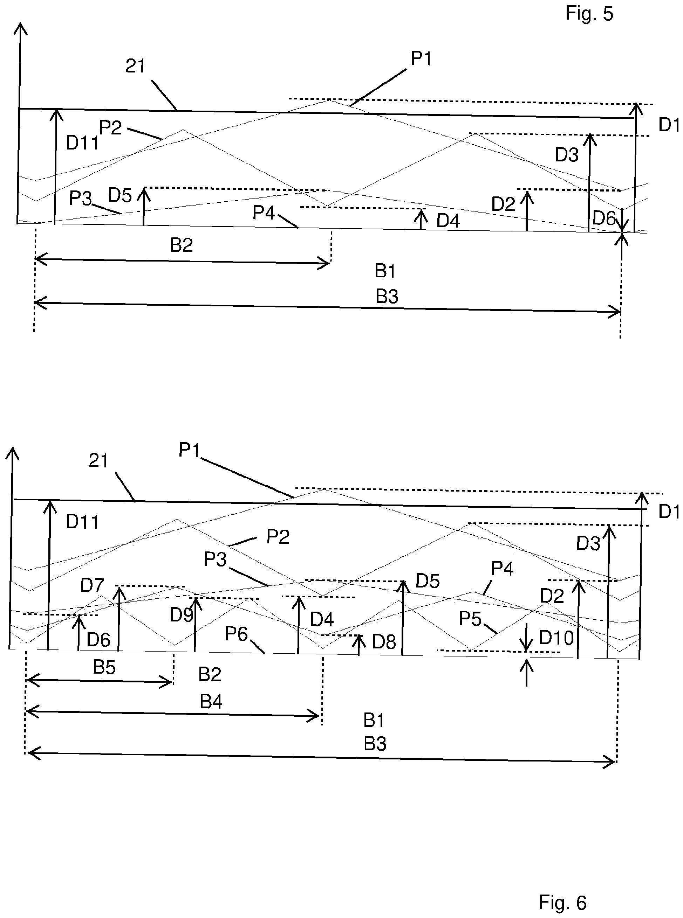

Reference is now made to Fig. 2. It is shown a threading tool 1 and a metal work piece 19. The threading tool 1 comprises a threading insert 2 and a tool body 9. The threading insert 2 comprises a cutting edge 10. The metal work piece 19 rotates in one direction 20 around a rotational axis A1 thereof. A CNC-lathe (not shown) comprises a spindle (not shown). The metal work piece 19 is clamped be clamping means 22 in the form of clamping jaws. A helical thread is formed in a peripheral or outer surface 21 of the metal work piece 19. In Fig. 2, the peripheral surface 21 is a radially outer surface, in other words the thread is a male thread. Alternatively, the thread may be a female thread. The thread form comprises a first thread flank 15, a second thread flank 16, a crest or thread crest 17 and a root or a thread root 18.
The thread is formed through several passes P1 - P4. The number of passes may vary. In this case, the fourth pass P4 is the last pass. During each pass P1-P4 the cutting edge 10 removes metal by metal cutting from the metal work piece 19. The threading tool 1 is moved in the same longitudinal direction during all passes P1-P4. In other words, the threading tool 1 is moved along the rotational axis A1, and/or along the Z-axis. The threading tool 1 is preferably moved in the same or substantially the same longitudinal feed rate, i.e. along the Z-axis, during all passes. Said feed rate is equal to the pitch of the thread. During all passes except the last pass P4, the threading tool 1 is oscillating along the X-axis. During the last pass P4 the threading tool 1 is not oscillating. Between the passes, the threading tool 1 is retracted to a start position, i.e. a position along the rotational axis A1 where the thread starts. The arrows in Fig. 2 for passes P1-P3 are horizontal. However, in detail the arrows are not horizontal but are rather wave shaped. Said wave shapes will be explained in Figs. 5 and 6.
The CNC-lathe (not shown) is controlled by a computer program. Said computer program comprises readable and executable code. The code comprises information regarding relative movements of the threading tool 1 in relation to the metal work piece 19, and in relation to the rotation of the metal work piece 19 around the rotational axis A1 thereof. In other words, the computer program comprises instructions for e.g. number of passes, radial oscillation, longitudinal feed rate and rotation of the work piece.

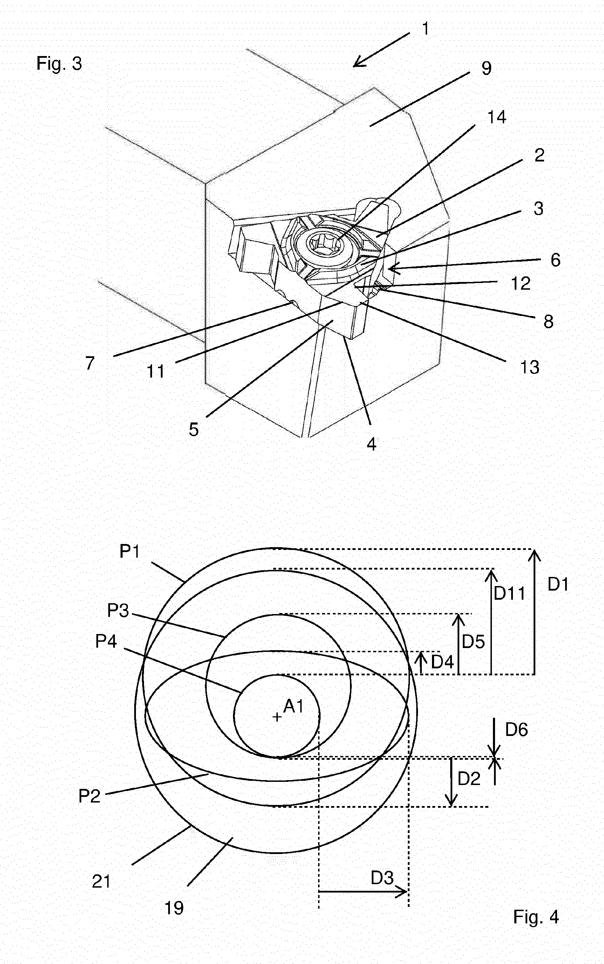

Fig. 3 show the threading tool 1 in Fig. 2. The threading tool 1 comprises a tool body 9 and a threading insert 2. An insert seat 6 is formed in the tool body 9. The threading insert 2 comprises three teeth. Only one tooth is mounted in an active state, i.e. mounted such that the tooth can cut a thread. The threading insert 2 is clamped in the insert seat 6 by means of a screw 14. The threading insert 2 is indexable, such that it can be rotated 120° or 240° to set a next tooth in an active position. Each tooth comprises a cutting edge. Each cutting edge comprises a first cutting edge 11 and a second cutting edge 12 connected by a connecting cutting edge 13. The connecting cutting edge 13 is arranged to cut a thread root.
The bottom surface of the threading insert comprises engagement means in the form of grooves 7. The insert seat comprises a ridge 8. The shape of one groove 7 corresponds or substantially corresponds to the shape of said ridge 8.

Fig. 4 is a schematic diagram illustrating passes P1-P4 traced by the threading tool 1 on the workpiece 19 as seen in a Z-axis direction. The cutting condition is adapted such that the number of oscillations of the threading tool 1 is one with respect to two rotations of the spindle for the first and third passes P1, P3 and one with respect to one rotation of the spindle for the second pass 2. One oscillation is for the first pass P1 from D1 to D2 and back to D1. One oscillation is for the second pass P2 from D3 to D4 and back to D3. One oscillation is for the third pass P3 from D5 to D6 and back to D5. The fourth pass P4 is without oscillation. After the second pass P2, the metal work piece is in cross section, i.e. when observed in the Z-axis direction, near oval in shape, more precisely shaped as an oval with two cut-outs.
During the first pass P1 and the third pass P3, there is one air cut per each two rotations of the metal work piece 19. An air cut is from the threading tool goes out of cut until the threading tool goes into cut. The trajectory of the first pass P1, i.e. the path traced by the threading tool 1 during the first pass P1, intersects the peripheral surface 21 of the metal work piece 19.

Fig 5 shows graphics illustrating the position of a cutting tool in a method where a thread is formed through four passes P1-P4, such as in Fig. 2. The vertical axis in Fig. 2 is the X-axis of the CNC-lathe, i.e. the radial direction. The horizontal axis in Fig. 2 is the Z-axis of the CNC-lathe. The horizontal axis can also be understood as time. As can be seen, all passes P1-P3 except the last pass P4 are wave-formed or wave-shaped. The longitudinal movements, i.e. the Z-axis movements of the threading tool during passes P1-P4 are represented by the extension along the horizontal axis for the lines representing passes P1-P4. The oscillations of the threading tool in a radial direction, i.e. X-axis direction, during passes P1-P4 are represented by the extension along the vertical axis in Fig. 5, i.e. the X-axis of the CNC-lathe. The peripheral surface 21 is shown as a line. The radial distance from the peripheral surface to the last pass P4 is shown as D11. Said radial distance D11 can be understood as the radial distance between the thread root to the peripheral surface 21.
During the first pass P1, the threading tool oscillates radially between a first radial distance D1 and a second radial distance D2 from a last pass P4. The difference or radial distance between said first and second radial distances D1, D2 is the amplitude of the oscillation during the first pass. Said oscillation is at a first frequency F1. It is shown that the period or time period of the first pass P1 is B1. It is shown that during the first pass P1 the threading tool goes out of cut and into cut one time per oscillation. In other words, the trajectory of the first pass P1 intersects the peripheral surface 21 of the metal work piece two times for each oscillation, i.e. two times per time period. The time which the line representing the first pass P1 is above the line representing the peripheral surface 21 is time when the cutting edge is inactive during the first pass P1, i.e. air time.
During the second pass P2, the threading tool oscillates radially between a third radial distance D3 and the fourth radial distance D4 from the last pass P4. The difference or radial distance between the third radial distance D3 and the fourth radial distance D4 is the amplitude of the oscillation during the second pass P2. The period or time period of the second pass P2 is B2. The period B2 represent one rotation of the metal work piece. The period B2 is different than the period B1. More specifically, the period B2 is smaller than the period B1. In other words, the frequency of the oscillation during the second pass P2 is higher than the frequency of the oscillation during the first pass P1. The trajectory of the second pass P2 intersects the first pass two times for each period. The trajectory of the second pass P2, i.e. the path traced by the threading tool 1 during the second pass P2, does not intersect the peripheral surface 21 of the metal work piece 19. The time which the line representing the second pass P2 is above the line representing the first pass P1 is time when the cutting edge is inactive during the second pass P2, i.e. air time. In other words, during the second pass P2, there is one air cut per each one rotation of the metal work piece 19. During the second last pass which is the third pass P3, the threading tool oscillates radially between a fifth radial distance D5 and a sixth radial distance D6 from the last pass P4. The sixth radial distance D6 is zero or less than half the difference between the first radial distance D1 and the second radial distance D2, preferably less than 0.10 mm. A depth of cut which reaches zero or near zero improves the possibility of short chips during the subsequent last pass, i.e. during the fourth pass P4. The difference or radial distance between the fifth radial distance D5 and the sixth radial distance D6 is the amplitude of the oscillation during the third pass P3. The period or time period of the third pass P3 is B3. The period B3 is different to the period B2. More specifically, the period B3 is greater than the period B2. In other words, the frequency of the oscillation during the second pass P2 is higher than the frequency of the oscillation during the third pass P3. The period B3 is the same or substantially the same as the period B1. The trajectory of the third pass P3 intersects the trajectory of the second pass P2 two times for each period. The time which the line representing the third pass P3 is above the line representing the second pass P2 is time when the cutting edge is inactive during the third pass P3, i.e. air time. In Fig. 5, it can be seen that the third radial distance D3 is greater than the fourth radial distance D4; that the first radial distance D1 is greater than the third radial distance D3; that the second radial distance is greater than the fourth radial distance D4; that the fifth radial distance D5 is greater than the sixth radial distance D6; that the fifth radial distance D5 is less than the third radial distance D3, and that the sixth radial distance D6 is less than the fourth radial distance D4.

Reference is now made to Fig. 6. Fig. 6 show a similar graphic representation as in Fig. 5, except in Fig. 6, there are six passes P1-P6 while in Fig. 5 it is shown only four passes. The first three passes P1-P3 are substantially the same as in Fig. 5. During the fourth pass P4, the threading tool oscillates between a seventh radial distance D7 and an eighth radial distance D8, where said radial distances are radial distances from the last pass which is the sixth pass P6. The radial distance between the seventh radial distance D7 and the eighth radial distance D8 is the amplitude of the oscillation during the fourth pass P4. The trajectory of the fourth pass P4 intersects the trajectory of the third pass P3 two times for each period. The period of the fourth pass P4 is B4, which is different to the period B3 of the third pass P3. The period B4 of the fourth pass P4 is equal to or substantially equal to the period B2 of the second pass P2. During the second last pass which is the fifth pass P5, the threading tool oscillates radially between a ninth radial distance D9 and a tenth radial distance D10 from the last pass P6. The tenth radial distance D10 is zero or less than half the difference between the first radial distance D1 and the second radial distance D2, preferably less than 0.10 mm. A depth of cut which reaches zero or near zero during the second last pass, i.e. the fifth pass P5, improves the possibility of short chips during the subsequent last pass, i.e. during the sixth pass P6. The difference or radial distance between the ninth radial distance D9 and the tenth radial distance D10 is the amplitude of the oscillation during the fifth pass P5. The period or time period of the fifth pass P5 is B5. The period B5 is different to the period B4. More specifically, the period B5 is smaller than the period B4. In other words, the frequency of the oscillation during the fifth pass P5 is higher than the frequency of the oscillation during the fourth pass P4. The trajectory of the fifth pass P5 intersects the trajectory of the fourth pass P4 two times for each period. The time which the line representing the fifth pass P5 is above the line representing the fourth pass P4 is time when the cutting edge is inactive during the fifth pass P5, i.e. air time.
During the last pass which is the sixth pass P6, the threading tool is moved without oscillation in the radial direction, i.e. the X-direction.

## Claims

1. A machining method for a CNC-lathe for forming a predefined thread (3) in a work piece (2), comprising the steps of:
providing a metal work piece (2),
providing a threading tool (1),
rotating the metal work piece (2) around a rotational axis (A1) thereof;
moving the threading tool (1) a longitudinal (Z) direction through a set of passes (P1 - P6), wherein the longitudinal (Z) direction is parallel to or coinciding the rotational axis;
during a first pass (P1) oscillating the threading tool (1) in a radial (X) direction at a first frequency such that the threading tool (1) moves between a first radial distance (D1) and a second radial distance (D2) from a last pass (P6) of the set of passes (P1 - P6),
wherein the first radial distance (D1) is greater than the second radial distance (D2);
during a second pass (P2) oscillating the threading tool (1) in a radial (X) direction at a second frequency, such that the threading tool (1) moves between a third radial distance (D3) and a fourth radial distance (D4) from the last pass (P6),
wherein the third radial distance (D3) is greater than the fourth radial distance D4),
wherein the first radial distance (D1) is greater than the third radial distance (D3),
wherein the second radial distance (D2) is greater than the fourth radial distance (D4);
and during a last pass (P6) moving the tool without oscillation in the radial (X) direction
**characterized in that**
the method comprises the further steps of during a third pass (P3) oscillating the threading tool (1) in a radial (X) direction at a third frequency, such that the threading tool (1) moves between a fifth radial distance (D5) and a sixth radial distance (D6) from the last pass (P6),
wherein the fifth radial distance (D5) is greater than the sixth radial distance (D6),
wherein the fifth radial distance (D5) is less than the third radial distance (D3),
wherein the sixth radial distance (D6) is less than the fourth radial distance (D4); and during the second last pass (P3, P5) oscillating the threading tool (1) between an outer radial distance (D5, D9) and an inner radial distance (D6, D10) from the last pass (P6), wherein said inner radial diastance (D6, 10) is zero or less than half the difference between the first radial distance (D1) and the second radial distance (D2).

2. The machining method according to any of the preceding claims, wherein the third radial distance (D3) is greater than the second radial distance (D2) and smaller than the first radial distance (D1).

3. The machining method according to any of the preceding claims, wherein a difference between the first radial distance (D1) and the second radial distance (D2) is different than a difference between the third radial distance (D3) and the fourth radial distance (D4).

4. The machining method according to any of the preceding claims, wherein a difference between the first radial distance (D1) and the third radial distance (D3) is smaller than a difference between the third radial distance (D3) and the second radial distance (D2).

5. The machining method according to any of the preceding claims, wherein the second frequency is different than the first frequency.

6. The machining method according to any of the preceding claims, wherein the third frequency is different than the second frequency.

7. The machining method according to any of the preceding claims, wherein the third frequency is the same or substantially the same as the first frequency.

8. The machining method according to any of the preceding claims, wherein second radial distance (D2) and the sixth radial distance (D6) coincide or substantially coincide in the longitudinal (Z) direction.

9. The machining method according to any of the preceding claims, wherein the fifth radial distance (D5) is greater than the fourth radial distance (D4).

10. The machining method according to any of the preceding claims,
wherein the difference between the fifth radial distance (D5) and the sixth radial distance (D6) is smaller than the difference between the first radial distance (D1) and the second radial distance (D2).

11. The machining method according to any of the preceding claims,
wherein during a fourth pass (P4), oscillating the threading tool (1) in a radial (X) direction at a fourth frequency (F4), such that the threading tool (1) moves between a seventh radial distance (D7) and an eighth radial distance (D8) from the last pass (P6);
wherein the seventh radial distance (D7) is greater than the eighth radial distance (D8);
wherein the seventh radial distance (D7) is less than the fifth radial distance (D5),
wherein the eighth radial distance (D8) is less than the sixth radial distance (D6).

12. The machining method according to claim 11,
wherein during a fifth pass (P5), oscillating the threading tool (1) in a radial (X) direction at a fifth frequency (F5), such that the threading tool (1) moves between a ninth radial distance (D9) and a tenth radial distance (D10) from the last pass (P6);
wherein the ninth radial distance (D9) is greater than the tenth radial distance (D10);
wherein the tenth radial distance (D10) is less than the eight radial distance (D8).

13. The machining method according to any of the preceding claims,
wherein for all passes (P1 - P6) the threading tool (1) is moved in the longitudinal (Z) direction at a longitudinal feed rate which is 0.5 - 3.0 mm/revolution.

14. The machining method according to any of the preceding claims,
wherein the threading tool (1) comprises a threading insert (2) and an insert seat (6),
wherein the threading insert (2) comprising a top surface (3) and a bottom surface (4),
wherein the top surface (3) and the bottom surface (4) are connected by a side surface (5),
wherein the bottom surface (4) comprises engagement means (7) for contact with a corresponding structure (8) formed in the insert seat (6).

15. A computer program having instructions which when executed by a CNC-lathe causes the CNC-lathe to perform the steps according to any of the preceding claims.
